# DEMANDE DE BREVET EUROPEEN

(11) **EP 1 970 588 A1**
(43) Date de publication de la demande: **17.09.2008**
(21) Numéro de dépôt: 08305045.0
(22) Date de dépôt: 04.03.2008
(51) Int. Cl.: F16D 11/10, F16D 23/02

(54) **Dispositif d'arrêt sans bruit du mouvement relatif de deux pièces entre elles, et application aux boïtes de vitesses à crabots de véhicule**

(30) Priorité: 14.03.2007 FR 0753834
(71) Demandeur: PEUGEOT CITROËN AUTOMOBILES S.A., 78140 Vélizy Villacoublay (FR)
(72) Inventeur: Lelasseux, Xavier, 92150, SURESNES (FR)

(57) **Abrégé**

Selon ce procédé, on met en contact les deux pièces (1, 2) selon une direction quasiment parallèle à la direction (f) de leur mouvement relatif, puis on fait évoluer la direction de mise en contact, de manière progressive et sans rupture de contact entre les deux pièces (1, 2), de telle manière qu'à l'approche de l'arrêt du mouvement relatif des deux pièces se terminant par l'accouplement des deux pièces, la direction de mise en contact soit sensiblement perpendiculaire à la direction (f) du mouvement relatif de la mise en contact, de manière à ce que l'énergie dissipée pendant l'accouplement ne se traduise pas sous forme de choc bruyant.

Mécanismes d'arrêt anti-choc et anti-bruit de pièces en mouvement relatif. Mécanismes d'accouplement par crabotage. Boîtes de vitesses à crabots de véhicules.

## Description

La présente invention concerne un procédé pour arrêter sans bruit le mouvement relatif de deux pièces entre elles. Elle concerne également un dispositif pour la mise en oeuvre d'un tel procédé. Elle concerne aussi diverses applications du procédé et du dispositif, en particulier aux mécanismes d'accouplement par crabotage, utilisés notamment dans des boîtes de vitesses mécaniques de véhicules automobiles.

Lorsqu'on entreprend d'arrêter quasi instantanément le mouvement relatif de deux pièces entre elles, qu'il s'agisse d'un mouvement relatif de translation ou d'un mouvement relatif de rotation entre les deux pièces, une grande partie de l'énergie cinétique des pièces lors du ralentissement et de l'arrêt du mouvement relatif est dissipée sous forme de choc, et ce choc est source de bruit.

On a cherché à surmonter cette difficulté, et par conséquent à réduire le bruit.

Le but de la présente invention est de fournir un procédé pour arrêter sans choc, et par conséquent sans bruit, le mouvement relatif de deux pièces entre elles.

C'est également un but de la présente invention de fournir un dispositif pour la mise en oeuvre d'un tel procédé.

Un autre but de la présente invention est d'appliquer le procédé et le dispositif de l'invention dans des mécanismes variés dans lesquels l'arrêt d'un mouvement relatif entre deux pièces entre elles entraîne un bruit non désirable.

A titre d'exemple, on a déjà cherché à réduire le bruit émis lors des passages des rapports de vitesse d'une boîte de vitesses mécanique de type à crabots.

Ainsi, selon la demande de brevet français FR 2 849 129, on connaît un dispositif de pilotage d'un système d'engagement des rapports de transmission dans une boîte de vitesses mécanique robotisée qui résout en partie le problème du bruit de crabotage. La boîte de vitesses comprend au moins un pignon monté fou sur un arbre rotatif, au moins un dispositif d'engagement par crabots avec un baladeur, des moyens à commande hydraulique pour l'actionnement du baladeur et au moins une électrovanne à pilotage électrique. La boîte de vitesse robotisée comprend également une unité de calcul électronique capable de recevoir des signaux représentatifs du fonctionnement de la boîte de vitesses et d'émettre des signaux de commande et de pilotage, notamment en direction des électrovannes. L'unité de calcul électronique est capable de déterminer, pour chaque rapport de transmission, plusieurs phases différentes de l'engagement pendant la durée de l'engagement et de fournir aux électrovannes des signaux de pilotage déterminant le courant électrique de pilotage des électrovannes de manière différente pour chacune des phases différentes de l'engagement.

Toutefois, ce dispositif qui fait usage d'un actionneur à vitesse variable ralentissant son action au moment opportun est de conception relativement complexe et son mode de réalisation n'en fait pas un système applicable à de nombreux mécanismes.

C'est la raison pour laquelle un autre but de la présente invention est de fournir un mécanisme d'accouplement de type à crabotage, notamment pour une boîte de vitesses mécanique, dans lequel est intégré le dispositif de l'invention pour arrêter sans bruit le mouvement relatif de deux pièces entre elles, ledit dispositif selon l'invention étant de conception simple par rapport aux moyens d'arrêt de l'art antérieur et venant, par conséquent, remplacer avantageusement les crabots trop bruyants.

C'est également un but de l'invention de fournir un tel dispositif d'arrêt sans bruit et un tel mécanisme d'accouplement de type à crabotage sans bruit, qui soient de conception simple, de réalisation aisée, qui soient robustes, fiables et économiques.

Pour parvenir à ces buts, la présente invention propose un procédé pour arrêter sans bruit le mouvement relatif de deux pièces entre elles, selon lequel on met en contact les deux pièces selon une direction quasiment parallèle à la direction de leur mouvement relatif, puis on fait évoluer la direction de mise en contact, de manière progressive et sans rupture de contact entre les deux pièces, de telle manière qu'à l'approche de l'arrêt du mouvement relatif des deux pièces se terminant par l'accouplement des deux pièces, la direction de mise en contact soit sensiblement perpendiculaire à la direction du mouvement relatif de la mise en contact, de manière à ce que l'énergie dissipée pendant l'accouplement ne se traduise pas sous forme de choc bruyant.

Selon le mode préféré de réalisation de l'invention, on fait évoluer la direction de mise en contact de manière progressive et sans rupture de contact vers une direction sensiblement perpendiculaire à la direction dudit mouvement relatif au moyen d'une rampe solidaire de la pièce de plus petite vitesse dans le mouvement relatif.

De préférence, cette rampe est constituée par une partie de ladite pièce de plus petite vitesse du mouvement relatif.

La présente invention propose aussi un dispositif pour la mise en oeuvre du procédé exposé ci-dessus dans ses grandes lignes.

Selon ce dispositif, une première pièce vient s'arrêter contre une seconde pièce. La seconde pièce présente une zone de contact en forme de rampe à rayon de courbure continûment décroissant. Le premier contact de la première pièce avec la seconde pièce se fait sur la partie d'entrée de la rampe qui est quasiment parallèle à la direction du mouvement relatif. Ensuite, le contact se poursuit, de manière progressive et sans rupture, pour donner une direction de contact sensiblement perpendiculaire à la direction du mouvement relatif d'entrée. Cette direction sensiblement perpendiculaire est obtenue grâce à la forme courbe à rayon de courbure continûment décroissant de la rampe.

De préférence, le rayon de courbure final de la rampe est au moins égal au rayon de la première pièce.

La présente invention peut s'appliquer à de nombreux systèmes où l'arrêt d'un mouvement relatif entre deux pièces induit un bruit non désirable. Elle peut s'appliquer, en particulier, à titre d'exemple non limitatif de l'objet et de la portée de la présente invention, à un mécanisme d'accouplement de type à crabotage, qui comporte un manchon - ou manchon baladeur - et un moyeu en rotation l'un par rapport à l'autre, et des moyens de crabotage pour accoupler le manchon et le moyeu. Dans un mécanisme d'accouplement de ce type, les moyens de crabotage sont constitués, d'une part, par des galets liés au manchon et, d'autre part, par au moins une zone du moyeu en forme de rampe à rayon de courbure continûment décroissant, le premier contact des galets en entrée de la rampe se faisant quasiment parallèlement à la direction du mouvement de rotation relatif, puis le contact se poursuivant, de manière progressive et sans rupture, jusqu'à donner aux galets, par la forme de la rampe elle-même, une direction sensiblement perpendiculaire au mouvement de rotation relatif.

Selon un mode de réalisation préféré du mécanisme d'accouplement, les galets sont montés sur le manchon par l'intermédiaire de ressorts individuels qui assurent le contact entre le moyeu et le manchon.

Les galets sont, de préférence, de forme oblongue, de hauteur légèrement inférieure à la hauteur radiale des rampes, et les rayons de courbure des parties de galet en contact avec les rampes sont inférieurs au rayon de courbure final des rampes.

Selon une variante de réalisation avantageuse, le moyeu présente une rampe à deux niveaux de jeu, un premier niveau présentant une première fenêtre angulaire relativement importante, de façon à assurer le crabotage, et un second niveau présentant une deuxième fenêtre angulaire, plus petite que la première, de façon à assurer le verrouillage du manchon par rapport au moyeu.

Enfin l'invention concerne aussi une boîte de vitesses mécanique synchronisée de type à crabots, dans laquelle les synchroniseurs de passage des rapports sont des mécanismes d'accouplement conformes à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 illustre, de manière très schématique, le principe fonctionnel d'un système d'arrêt d'un mouvement relatif de deux pièces entre elles, selon l'art antérieur,
- la figure 2 illustre, de manière très schématique, le principe fonctionnel d'un dispositif d'arrêt d'un mouvement relatif de deux pièces entre elles, selon la présente invention,
- la figure 3 est une vue en coupe, schématique, du principe de l'application du dispositif d'arrêt de l'invention à un mécanisme d'accouplement de type « par crabotage »,
- la figure 4 est une vue en perspective, schématique, du moyeu et des galets du mécanisme de la figure 3,
- la figure 5 est une vue en perspective, schématique, des galets et du profil à rampe du mécanisme de la figure 3,
- la figure 6 est une vue en perspective d'un galet du mécanisme des figures 3 à 5,
- la figure 7 est une vue partielle, en perspective, schématique, du galets et d'une rampe du mécanisme des figures 3 à 6, et
- la figure 8 est une vue en perspective, schématique, d'une variante de réalisation du moyeu du mécanisme d'accouplement de type à crabotage, selon la présente invention.

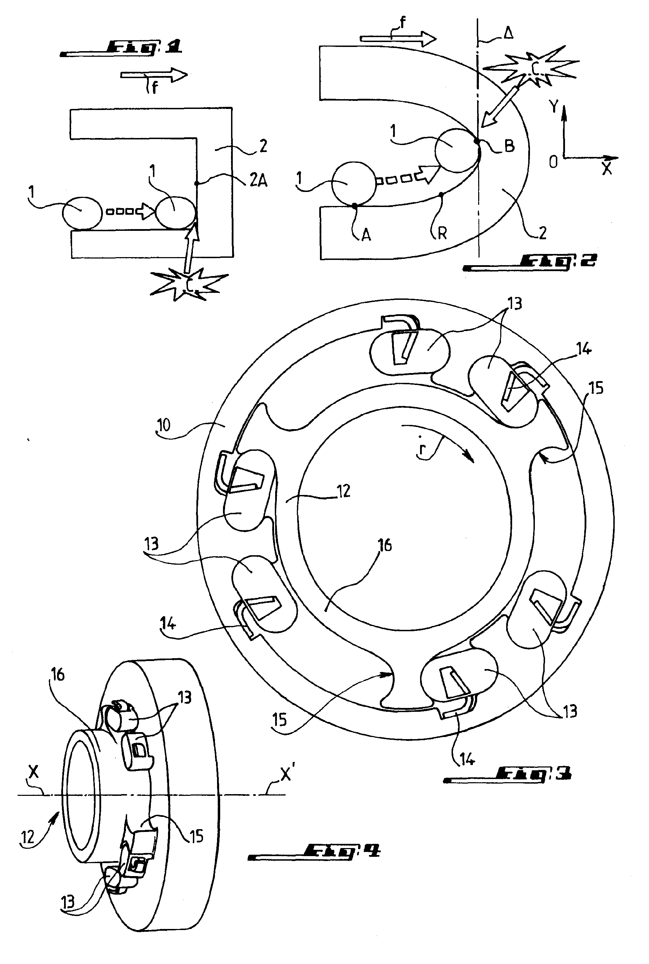

En référence au dessin de la figure 1, on a illustré, de manière schématique, le problème auquel la présente invention vient apporter une solution. La figure 1 illustre un mouvement relatif entre deux pièces 1 et 2, la flèche « f » représentant le sens de déplacement commandé de la pièce 1 par rapport à la pièce 2. Le mouvement relatif se termine par un choc C dès que se fait le contact de la pièce 1 avec la paroi 2A de la pièce 2, la paroi 2A étant perpendiculaire à la direction d'impact de la pièce 1 contre la pièce 2. L'énergie issue de l'inertie des pièces 1 et 2 est dissipée, lors de leur modification de vitesse, sous forme de choc et de déformation, par conséquent en partie sous forme de bruit.

De façon à éviter le choc bruyant, la présente invention conçoit différemment la mise en contact des deux pièces 1 et 2, le ralentissement et l'arrêt de leur mouvement relatif. Le principe fonctionnel d'un dispositif d'arrêt selon la présente invention est illustré sur la figure 2, dans laquelle les mêmes références numériques désignent des éléments et pièces similaires à ceux de la figure 1. La flèche « f » désigne, comme précédemment, le sens du mouvement relatif de la pièce 1 par rapport à la pièce 2 qui doit être arrêté. La référence R désigne la forme courbe ou rampe intérieure de la pièce 2, décrite plus en détail dans la suite du présent texte. Le premier contact de la pièce 1 avec la pièce 2, illustré par le point A, se fait de manière tangentielle au mouvement relatif f, quand la pièce 1 approche de la pièce 2. Une fois le contact établi, le rayon de courbure de la rampe R diminue progressivement, de façon continue, de telle façon que le point de contact entre la pièce 1 et la pièce 2 s'écarte latéralement de la direction de f et finit par se trouver sur une perpendiculaire Δ à cette direction f dans la position illustrée par le point B de la figure 2.

Pour éviter tout choc entre la pièce 1 et la pièce 2, il est important que le rayon de courbure final de la rampe R soit au moins égal au rayon de la pièce 1. L'inexistence de choc a pour corollaire que l'énergie issue de l'inertie de la pièce 1 au moment de l'arrêt est intégralement transformée en déformation élastique des pièces 1 et 2. La pièce 1 se déplace légèrement en hauteur (selon Y). Il faut que le mouvement de la pièce 1 soit rendu possible par la pièce qui viendrait pousser la pièce 1 dans son déplacement de la gauche vers la droite. De plus, il faut que la pièce qui pousse la pièce 1 assure également un effort, même très faible, vers le bas, de manière à assurer la continuité de contact entre la pièce 1 et la pièce 2. Le ralentissement et l'arrêt du mouvement relatif des deux pièces 1 et 2 entre elles doivent impérativement se faire sans rupture de contact entre lesdites deux pièces 1 et 2. Si une rupture de contact devait apparaître, il y aurait alors un choc, et par conséquent un bruit, à la reprise de contact.

On va décrire maintenant, à titre d'exemple non limitatif de l'objet et de la portée de la présente demande de brevet, le principe de l'application du dispositif d'arrêt de l'invention décrit ci-dessus à un mécanisme d'accouplement par crabotage utilisé, notamment, dans une boîte de vitesses mécanique de type à crabots.

De manière générale, les crabots d'un mécanisme d'accouplement par crabotage utilisé dans une boîte de vitesses mécanique, appelés aussi cannelures de crabotage, sont les dents, formant une espèce de crénelage, qui permettent d'accoupler - c'est-à-dire de craboter - le pignon fou et le manchon baladeur du synchroniseur. Ainsi, lors du crabotage, le manchon baladeur vient engrener ses crabots sur ceux du pignon fou.

En référence aux dessins des figures 3 à 8, les deux parties mobiles en rotation l'une par rapport à l'autre dont le mouvement relatif doit être arrêté sont, d'une part, le manchon 10 et, d'autre part, le moyeu 12. Le moyeu 12 est constitué par une pluralité de rampes au rayon de courbure continûment variable, référencées 15 et une partie cylindrique 16, axialement décalée de la partie du moyeu 12 qui porte les rampes 15. Lorsque le manchon 10 est en position « décrabotée », des galets 13, montés sur la périphérie interne du manchon 10, sont en contact permanent avec la partie cylindrique 16 du moyeu 12, sous l'action de rappel élastique de ressorts 14. La translation axiale, c'est-à-dire selon l'axe XX' (figure 4), du manchon 10 vers le moyeu 12 met progressivement en contact les galets 13 avec les rampes 15 du moyeu 12, de telle sorte que le mouvement de rotation relatif entre le manchon 10 et le moyeu 12 est arrêté.

L'existence des rampes 15, fonctionnellement équivalentes à la rampe R de la figure 2, se traduit par une absence de choc et, par conséquent, de bruit, les galets 13 ayant des points de contact avec les rampes 15 qui évoluent de manière progressive et sans rupture de contact jusqu'à se trouver sur une perpendiculaire au mouvement de rotation relatif « r ». Les galets 13 sont liés au manchon 10 via un rayon qui leur permet d'avoir un léger mouvement de rotation, de façon à pouvoir monter sur la rampe 15. Les ressorts individuels 14 assurent également le contact entre le moyeu 12 et le manchon 10, de façon à ne pas avoir de jeu entre ces derniers.

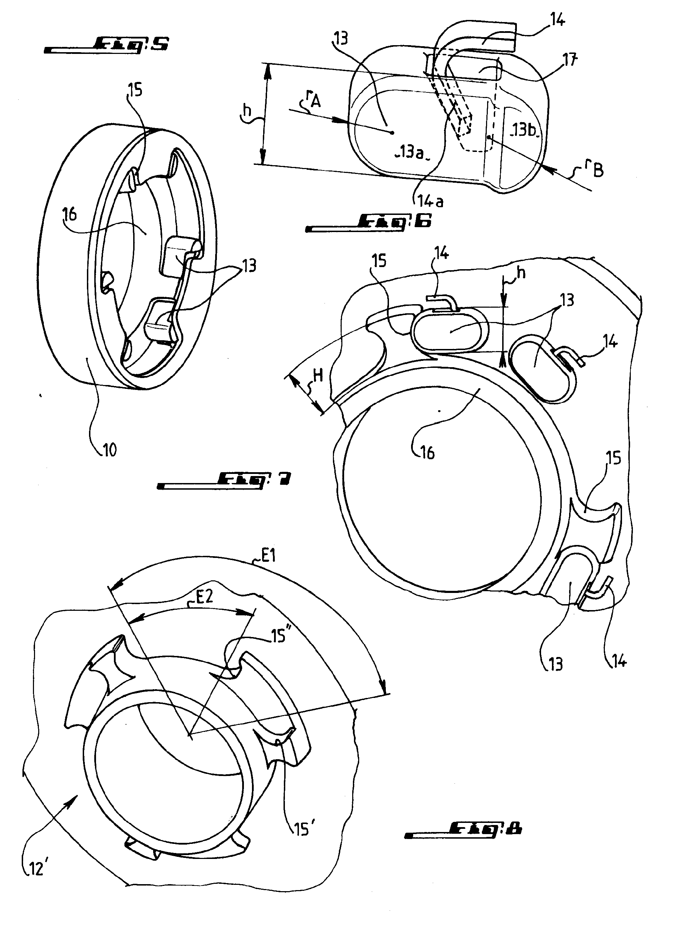

En référence plus particulière au dessin de la figure 6, chaque galet 13 présente une forme générale oblongue, avec des rayons de courbure avant r_{A} et arrière r_{B} légèrement inférieurs au rayon de courbure final des rampes 15 contre lesquelles les galets viennent s'arrêter. Chaque galet 13 est de hauteur h inférieure à la hauteur radiale H des rampes 15, et cette hauteur h est adaptée pour permettre le mouvement du point de contact du galet 13 sur la rampe associée 15 selon le principe de la présente invention exposé précédemment. Chaque galet 13 est formé en deux parties 13a et 13b, très légèrement décalées l'une par rapport à l'autre, de façon à autoriser le mouvement d'oscillation du galet 13. De cette manière, la prise de contact entre le galet 13 et la rampe 15 associée, qui est d'abord tangentielle au mouvement de rotation relatif « r », se poursuit, de manière progressive et sans rupture de contact, pour donner une direction de contact entre le galet 13 et la rampe 15 associée sensiblement perpendiculaire au mouvement de rotation relatif « r », cette évolution de la direction de contact étant donnée par la forme de la rampe 15 à rayon de courbure continûment décroissant. Le ressort 14 est un ressort de type lame en forme de « V », par exemple, logé dans un évidement 17 du galet 13. L'inclinaison de la partie 14a du ressort permet d'éviter toute rupture de contact entre les galets 13 et les rampes 15 associées.

La différence d'encombrement angulaire entre les galets 13 liés au manchon 10 et les rampes 15 du moyeu 12 permet d'avoir un mouvement angulaire relatif entre le manchon 10 et le moyeu 12. Cette différence - ou fenêtre angulaire - est indispensable pour assurer le crabotage lors de différences de mouvements de rotation importantes. Ces mouvements, bien que limités, posent le problème du « ré attelage », qui est source d'inconfort. ¨Pour remédier à cela, on peut recourir à un autre mode de réalisation du moyeu, désigné 12' sur le dessin de la figure 8. Le moyeu 12' comporte deux niveaux de jeu - ou étages - référencés E1 et E2. Le premier niveau E1 présente une première fenêtre angulaire relativement importante, de façon à assurer le crabotage. Le second niveau E2 présente une deuxième fenêtre angulaire plus petite que la première, qui assure le verrouillage. Le premier niveau E1 sera atteint pour une course axiale du manchon 10 donnée, tandis que le second niveau E2 sera atteint pour une course axiale du manchon 10 plus importante. Aux niveaux de jeu E1 et E2 correspondent des rampes 15' et 15", respectivement.

La présente invention présente les avantages suivants :
- elle permet de réaliser un arrêt quasi instantané du mouvement relatif de deux pièces entre elles sans bruit, pour leur accouplement.
- elle s'applique à tout type de mouvement relatif, en particulier aux mouvements de translation comme aux mouvements de rotation,
- elle trouve de très nombreuses applications, comme par exemple les mécanismes d'accouplement par crabotage rencontrés dans les boîtes de vitesses mécaniques dans lesquelles elle remplace avantageusement les crabots trop bruyants, les portes dans lesquelles elle permet de supprimer les bruits de claquement, et de manière générale, tous systèmes dans lesquels l'arrêt d'un mouvement relatif entre deux pièces induit un bruit non souhaitable.

Bien entendu, la présente invention n'est pas limitée aux modes de réalisation décrits et représentés ci-dessus à titre d'exemples.

D'autres modes de réalisation peuvent être conçus par l'homme de métier sans sortir du cadre et de la portée de la présente invention.

## Revendications

1. Dispositif pour arrêter sans choc le mouvement relatif d'une première pièce (1) par rapport à une seconde pièce (2), **caractérisé en ce que** la seconde pièce (2) présente une zone de contact en forme de rampe (R) à rayon de courbure continûment décroissant, le premier contact de la première pièce (1) avec la seconde pièce (2) se faisant sur une partie d'entrée de la rampe (R) quasiment parallèle à la direction (f) du mouvement relatif, puis le contact se poursuivant de manière progressive et sans rupture pour donner une direction sensiblement perpendiculaire au mouvement relatif donnée par la forme de la rampe.

2. Dispositif selon la revendication 1, **caractérisé en ce que** le rayon de courbure final de la rampe est au moins égal au rayon de ladite première pièce.

3. Dispositif selon l'une quelconque des revendications 1 à 2, **caractérisé en ce que** seconde pièce qui présente la rampe (R) à rayon de courbure continûment décroissant est prévue pour être la pièce ayant la plus petite vitesse dans le mouvement relatif avec la première pièce.

4. Mécanisme d'accouplement de type par crabotage, qui comporte un manchon (10) et un moyeu (12) en rotation l'un par rapport à l'autre, et des moyens de crabotage pour accoupler le manchon (10) et le moyeu (12), **caractérisé en ce que** lesdits moyens de crabotage sont constitués, d'une part, par des galets (13) liés au manchon (10) et, d'autre part, par au moins une zone du moyeu (12) en forme de rampe à rayon de courbure continûment décroissant, le premier contact des galets (13) en entrée de la rampe se faisant quasiment parallèlement à la direction du mouvement de rotation relatif (r), puis le contact se poursuivant, de manière progressive et sans rupture, jusqu'à donner aux galets (13), par la forme de la rampe elle-même, une direction sensiblement perpendiculaire au mouvement de rotation relatif (r).

5. Mécanisme selon la revendication 4, **caractérisé en ce que** les galets (13) sont montés sur le manchon par l'intermédiaire de ressorts individuels (14) qui assurent le contact entre le moyeu (12) et le manchon (10).

6. Mécanisme selon l'une quelconque des revendications 4 et 5, **caractérisé en ce** les galets (13) sont de forme oblongue, de hauteur (h) légèrement inférieure à la hauteur radiale (H) des rampes (15), et les rayons de courbure des parties de galet (r_{A}, r_{B}) en contact avec les rampes (15) sont inférieurs au rayon de courbure final des rampes (15).

7. Mécanisme selon l'une quelconque des revendications 4 à 6, **caractérisé en ce que** le moyeu (12) présente une rampe à deux niveaux de jeu, un premier niveau (E1) à fenêtre angulaire relativement importante, de façon à assurer le crabotage, et un second niveau (E2) à fenêtre angulaire petite, de façon à assurer le verrouillage du manchon (10) par rapport au moyeu (12).

8. Boîte de vitesses mécanique synchronisée, **caractérisée en ce que** les synchroniseurs de passage des rapports sont des mécanismes d'accouplement conformes à l'une quelconque des revendications 4 à 7.
